(19) Europäisches Patentamt / European Patent Office / Office européen des brevets

(11) **EP 1 630 684 B1**

(12) **EUROPEAN PATENT SPECIFICATION**

(45) Date of publication and mention
of the grant of the patent:
**11.04.2007 Bulletin 2007/15**

(51) Int Cl.:
***G06F 15/173*** *(2006.01)*     ***H04L 12/56*** *(2006.01)*

(21) Application number: **05016128.0**

(22) Date of filing: **25.07.2005**

(54) **Data distribution system based on a Peer-to-Peer architecture**

Datenverteilungssystem basierend auf einer Punkt-zu-Punkt Architektur

Système de distribution de données basé sur une architecture Point-à-Point

(84) Designated Contracting States:
**DE FR GB**

(30) Priority: **31.08.2004  JP 2004251541**

(43) Date of publication of application:
**01.03.2006  Bulletin 2006/09**

(73) Proprietor: **Onkyo Corporation**
**Neyagawa-shi,**
**Osaka 572-8540 (JP)**

(72) Inventor: **Ikeda, Yasushi**
**Neyagawa-shi**
**Osaka 572-8540 (JP)**

(74) Representative: **Reinhard - Skuhra - Weise &**
**Partner**
**Postfach 44 01 51**
**80750 München (DE)**

(56) References cited:
**US-A- 6 081 840          US-B1- 6 505 254**
**US-B1- 6 553 413**

**Description**

**BACKGROUND OF THE INVENTION**

**1. FIELD OF THE INVENTION**

The present invention relates to a peer-to-peer-type content distribution system, and more particularly to a hybrid-type content distribution system using a center server.

**2. DESCRIPTION OF THE RELATED ART**

In a conventional client-server-type content distribution system, content items are stored in the server and are sent to clients as requested by the clients. With this system, however, it is necessary to upgrade the server as the number of clients increases, and the management and maintenance costs will inevitably increase.

In a peer-to-peer-type content distribution system, which has been popular in recent years, content items are exchanged between peers, and the file transfer loads are distributed among different peers. Therefore, with this system, content items can be distributed among a much larger number of peers (clients) as compared with the client-server-type content distribution system.

However, with the peer-to-peer-type content distribution systems currently available, it is difficult to keep track of, and control, how content items are exchanged and used, and therefore users of these systems may infringe the copyrights of content items being exchanged. "Gnutella" and "Winny" are known content distribution systems of a pure peer-to-peer type using no center server, and they have both raised serious copyright issues.

"Napster" is a known content distribution system of a peer-to-peer type using a center server. A system of this type is also called a "hybrid-type content distribution system". because it is a mix of a peer-to-peer system and a client-server system.

US Patent 6,505,254 discloses a system and a method for routing requests received from client computers. The client computer processor is redirected to a router for which the address is within the preferred coverage zone. If a router is not identified for which the address is within a preferred coverage zone, but a router other than the router that received the request is identified for which the address is within a regular coverage zone, the processor is redirected to the router for which the address is within the regular coverage zone. If a message is transmitted from a router behind a firewall to a router outside the firewall, and then a request for data is received from a processor behind the firewall, the processor is redirected to the address of the router. Routers register themselves dynamically into a hierarchy. In another alternative embodiment, a service request from a particular client computer is serviced immediately by the root router rather than redirected to another router. The root router then attempts to find the best source server for the client computer. The next service request from the client computer is dispatched directly by the root router to this best router. Furthermore, US Patent 6,081,840 discloses a system for efficiently distributing computer data files to remotely located end users over a communications network, such as the Internet, where a source server is maintained with all of the data files for use by the end users, and several local servers are connected to the source server and contain subsets of the data contained in the source server.

**SUMMARY OF THE INVENTION**

It is therefore an object of the present invention to provide a peer-to-peer-type content distribution system with copyright protection capabilities. It is another object of the present invention to provide a peer-to-peer-type content distribution system in which file transfer loads are distributed.

A peer-to-peer-type content distribution system of the present invention includes a center server and a plurality of first peers (dynamic peers) connected to the center server. The center server includes: a global storage section for storing content information regarding particulars and a location of each content item stored in each first peer and load information regarding a load on the first peer; a content information registration section for registering the content information received from the first peer in the global storage section; a load information registration section for registering, in the global storage section, the load information of the first peer according to an operation status received from the first peer; and an information returning section for returning, in response to a request from a first peer, the content information and the load information to the first peer. Each first peer includes: a local storage section for storing a content item; a section for obtaining the content information and the load information from the center server; a section for selecting one or more sender peers, being one or more of the plurality of first peers, having a desired content item stored therein based on the obtained content information, and for further selecting one sender peer with a lowest load, from among the selected one or more sender peers, based on the obtained load information; a section for requesting the selected sender peer to send the desired content item and downloading the desired content item from the selected sender peer;

a section for registering the downloaded content item in the local storage section; a section for sending content information of the registered content item to the center server; an operation status notification section for sending an operation status of the first peer to the center server; and a section for uploading a desired content item to other peers in response to requests from the other peers.

In the system of the present invention, the center server collects content information from the first peers, and the collected content information can be sent to a first peer in response to a request from the first peer. Therefore, each first peer can determine which other first peers have a desired content item stored therein. Thus, content items can be exchanged between the first peers. Since the center server collects the operation status information of the first peers, content items can be lawfully exchanged while protecting the copyrights thereof. The load information of each first peer can be sent from the center server to other first peers. Therefore, each first peer can determine a first peer with the lowest load as a sender, and the first peer can download a desired content item from the sender peer of the lowest load. As a result, the file transfer loads for exchanging content items among various peers are distributed among the peers.

While a sender peer with the lowest load is selected and a requesting peer downloads a content item from the selected sender peer in the system as described above, the requesting peer may alternatively download a desired content item from a sender peer that is selected based simply on the operation status. Where a sender peer is selected based on the load information, a requesting peer may alternatively select a peer with the $n^{th}$ lowest load (n is a natural number other than 1) as the sender peer, instead of selecting the peer with the lowest load. Specifically, a requesting peer may select a peer with as low a load as possible based not only on the load information but also on the operation status, for example.

Alternatively, a peer with the lowest load may be selected by the center server instead of a requesting peer. Therefore, "the first peer selecting a sender peer" as used herein can include a case where the center server selects one sender peer with the lowest load based on the load information and notifies the first peer of the selected sender peer, in response to which the first peer selects the sender peer, which has already been selected by the center server.

Preferably, the peer-to-peer-type content distribution system further includes a second peer (static peer) connected to the center server. The second peer includes: a local storage section for storing a content item; a section for registering a content item in the local storage section; a section for sending content information of the registered content item to the center server; an operation status notification section for sending an operation status of the second peer to the center server; and a section for uploading a desired content item to a requesting first peer in response to a request from the first peer. The content information registration section registers the content information sent from the second peer in the global storage section. The load information registration section registers load information in the global storage section according to the operation status sent from the second peer.

In such a case, a new content item can be uploaded to the second peer, and the new content item can thereafter be sent to the first peers from the second peer.

Preferably, the content information of a content item includes meta information regarding particulars of the content item and location information regarding a location of the content item. The location information includes identification information regarding an identification of each peer having the content item stored therein and load information regarding a load on the peer.

In such a case, since the load information of a sender peer is added to the content information, the first peer can select a sender peer with the lowest load by obtaining the content information.

A center server of the present invention is the center server used in the peer-to-peer-type content distribution system set forth above. A dynamic peer of the present invention is the first peer used in the peer-to-peer-type content distribution system set forth above. A static peer of the present invention is the second peer used in the peer-to-peer-type content distribution system set forth above. A peer-to-peer-type content distribution method is an operation method of the peer-to-peer-type content distribution system set forth above. A content distribution control method of the present invention is an operation method of the center server. A computer program for use in a center server of the present invention is a computer program for operating the center server. A computer program for use in a dynamic peer of the present invention is a computer program for operating the dynamic peer. A computer program for use in a static peer of the present invention is a computer program for operating the static peer.

## BRIEF DESCRIPTION OF THE DRAWINGS

FIG. **1** is a network diagram showing a general configuration of a peer-to-peer-type content distribution system according to an embodiment of the present invention.
FIG. **2** is a functional block diagram showing a specific configuration of the peer-to-peer-type content distribution system shown in FIG. **1**.
FIG. **3** shows the data structure of a record in a content management database shown in FIG. **2**.

FIG. **4** shows an example of the content management database shown in FIG. **2**.

FIG. **5** shows an example of a local database shown in FIG. **2**.

FIG. **6** shows the data structure of a record in a peer operation status database shown in FIG. **2**.

FIG. **7** shows the data structure of a record in a peer load management database shown in FIG. **2**.

FIG. **8** is a flow chart showing an operation of registering a new content item by a static peer in the peer-to-peer-type content distribution system shown in FIG. **2**.

FIG. **9** is a flow chart showing a content item distribution operation by a dynamic peer in the peer-to-peer-type content distribution system shown in FIG. **2**.

FIG. **10** is a flow chart showing in detail a content item registration operation (local) shown in FIG. **8** or FIG. **9**.

FIG. **11** is a flow chart showing in detail a content information registration operation (global) shown in FIG. **8** or FIG. **9**.

FIG. **12** shows an example of a content item distribution operation by the peer-to-peer-type content distribution system shown in FIG. **2**.

FIG. **13** shows a load calculation parameter table provided in a center server shown in FIG. **12**.

FIG. **14** is a flow chart showing a content item distribution operation by the peer-to-peer-type content distribution system shown in FIG. **12**.

## DETAILED DESCRIPTION OF THE PREFERRED EMBODIMENTS

A preferred embodiment of the present invention will now be described with reference to the drawings. Like elements are denoted by like reference numerals throughout the various figures, and will not be described repeatedly.

### 1. Configuration

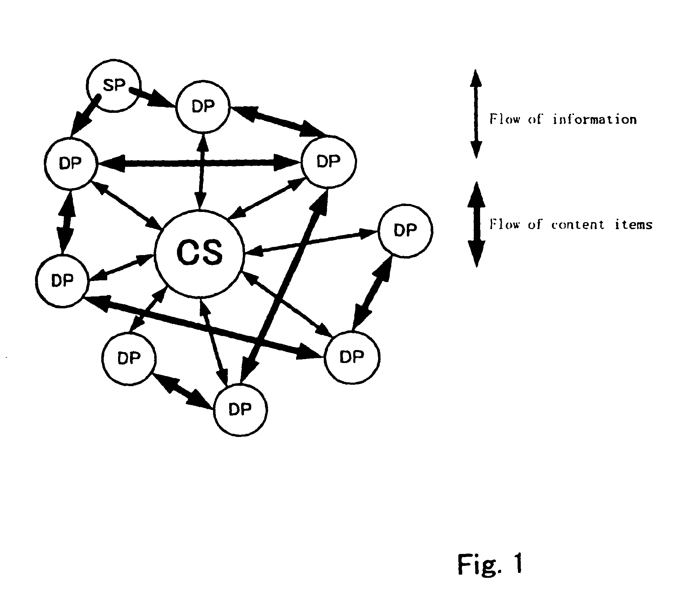

Referring to FIG. **1,** a peer-to-peer-type content distribution system according to the embodiment of the present invention includes a center server **CS** and a number of dynamic peers **DP**. They are connected together via a telecommunications line (not shown) such as the Internet. Content items are distributed among the dynamic peers **DP** by being exchanged between the dynamic peers **DP**. Therefore, content items are stored in the dynamic peers **DP** and not in the center server **CS.**

The center server **CS** controls the distribution of content items among the dynamic peers **DP** by collecting information regarding the particulars and the locations of content items stored in the dynamic peers **DP** (hereinafter referred to as "content information") and by sending the collected content information to the dynamic peers **DP.**

Each dynamic peer **DP** sends the center server **CS** the content information regarding content items stored therein, and receives from the center server **CS** the content information regarding a desired content item. Therefore, each dynamic peer **DP** functions also as a client with respect to the center server **CS.** Based on the content information obtained from the center server **CS,** each dynamic peer **DP** downloads a desired content item from another dynamic peer **DP.**

The system further includes one or more static peers SP similar in function to the dynamic peers **DP.** The static peer **SP** serves as the source of content distribution, and does not perform operations such as retrieving content information regarding a desired content item from the center server **CS** or downloading a desired content item from a dynamic peer **DP.** A dynamic peer **DP** can download a desired content item not only from other dynamic peers **DP** but also from the static peer **SP.**

For example, the center server **CS** may be commonly operated by a plurality of content vendors. Each static peer **SP** may be operated by a single content vendor. Each dynamic peer **DP** may be operated by a user who purchases content items. Specifically, each dynamic peer **DP** may be a user's personal computer, which has a 24-hour Internet connection via a high-speed broadband service such as FTTH (Fiber To The Home), ADSL (Asymmetric Digital Subscriber Line) and CATV (Cable TV).

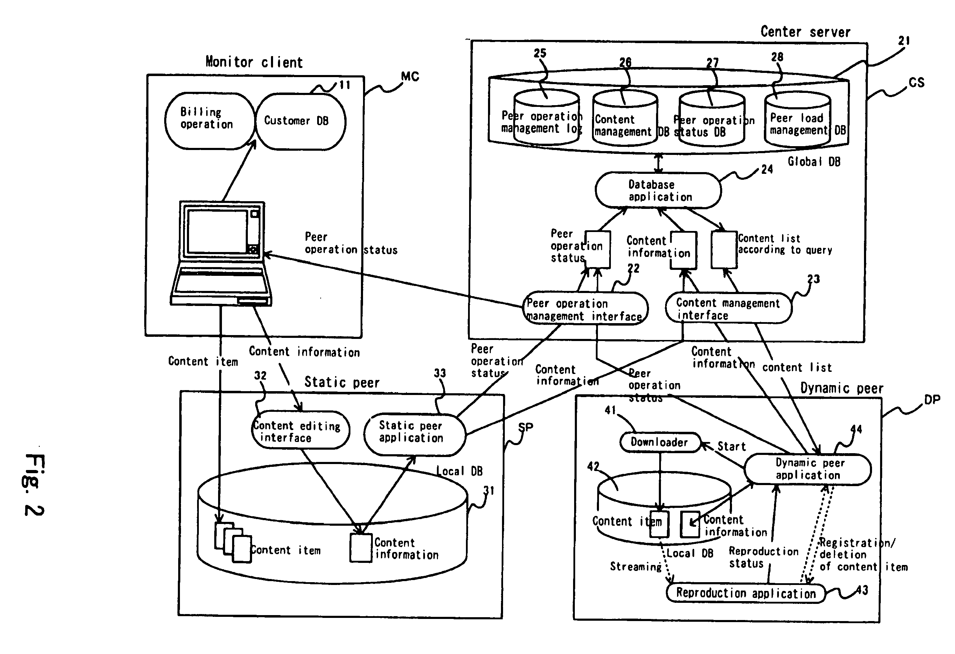

Referring now to FIG. **2**, a specific configuration of the system will be described.

### 1.1. Monitor Client

In addition to the elements shown in FIG. **1,** the system further includes one or more monitor clients **MC** for monitoring the system. For example, the monitor client **MC** is operated by a content vendor.

The monitor client **MC** has a function of registering new content items to be sent to the dynamic peers **DP** in the static peer **SP,** and a function of editing meta information of each new content item and sending it to the static peer **SP.** The monitor client **MC** also has a customer database **11,** and performs a billing operation according to the content distribution status reported from the center server **CS.**

1. 2. Center Server

The center server **CS** includes a global database **21,** a peer operation management interface **22,** a content management interface **23,** and a database application **24.**

The global database **21** includes a peer operation management log **25,** a content management database **26,** a peer operation status database **27,** and a peer load management database **28.** The peer operation management log **25** is used for recording the operations history of the peers **SP** and **DP.** The content management database **26** stores the content information for content items stored in the peers **SP** and **DP.** The peer operation status database **27** stores the operation status of the peers **SP** and **DP.** The peer load management database **28** stores load information regarding the load on the peers **SP** and **DP.**

The peer operation management interface **22** receives operation status information from each peer **SP** or **DP** (hereinafter referred to as the "peer operation status"), and sends the peer operation status to the monitor client **MC.**

The content management interface **23** receives content information from the peers **SP** and **DP.** The content management interface **23** also receives a query issued from a dynamic peer **DP,** and sends a content list produced according to the query to the dynamic peer **DP.**

The database application **24** registers the peer operation status received by the peer operation management interface **22** in the peer operation status database **27,** and calculates the load on the peers **SP** and **DP** based on the peer operation status to register the load information regarding the calculated load in the peer load management database **28.** The database application **24** registers the content information received by the content management interface **23** in the content management database **26.** The database application **24** performs a search through the content management database **26** and the peer load management database **28** according to the query received by the content management interface **23,** and produces a content list including the retrieved content information and load information.

1.3. Static Peer

The static peer **SP** includes a local database **31,** a content editing interface **32,** and a static peer application **33.**

The local database **31** stores a number of new content items released from the monitor client **MC.** The content editing interface **32** registers, in the local database **31,** the new content items uploaded from the monitor client **MC** and the content information for the new content items. The static peer application **33** sends the content information of the registered new content items to the center server **CS** as "new arrivals information". The static peer application **33** also sends a requested content item to a dynamic peer **DP** in response to a request from the dynamic peer **DP.** 1.4. Dynamic Peer

The dynamic peer **DP** includes a downloader **41,** a local database **42,** a reproduction application **43,** and a dynamic peer application **44.**

The downloader **41** downloads desired content items from the static peer **SP** or other dynamic peers **DP.** The local database **42** stores the downloaded content items. The reproduction application **43** reads out a desired content item from the local database **42** by a streaming method, and reproduces sound and/or video images based on the content item.

The dynamic peer application **44** issues a query requesting the center server **CS** to send the content information for a desired content item and the load information, and registers the content information for the desired content item and the load information in the local database **42** based on the content list obtained from the center server **CS.** The dynamic peer application **44** specifies one or more peers storing the desired content item based on the obtained content information and load information, and further specifies one of those peers for which the load is lowest. The dynamic peer application **44** requests the desired content item from the specified peer, and starts the downloader **41** for downloading the desired content item. The dynamic peer application **44** registers the downloaded content item in the local database **42.** The dynamic peer application **44** sends the content information for the registered content item and the operation status of itself to the center server **CS.** The dynamic peer application **44** can also send a desired content item in response to a request from another dynamic peer **DP.** The dynamic peer application **44** can also delete a desired content item from the local database **42** in response to a user's operation.

1.5. Records In Content Management Database

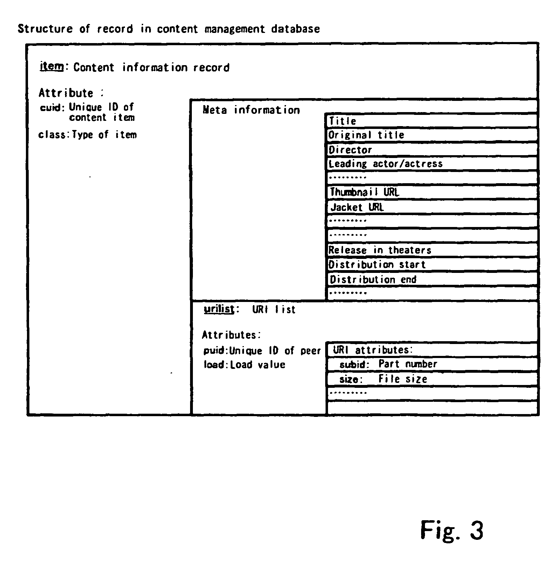

FIG. **3** shows the data structure of a record in the content management database **26.** The content management database **26** includes a number of content information records ('item'), and the number of content information records is equal to the total number of content items. Each content information record ('item') includes meta information and one or more URI lists ('urilist'). The attributes of the content information record ('item') include the unique ID ('cuid') of the content item and the type ('class') of the content item ("video", "music", etc.).

The meta information represents the particulars of the content item, including the title of the content item, the name of the director, and the name of the leading actor/actress. The URI list ('urilist') is location information representing the location of the content item. The number of URI lists ('urilist') included in a content information record ('item') is equal to the number of the peers **SP** and **DP** having the content item stored therein. The attributes of the URI list ('urilist') include the unique ID ('puid') of the peer **SP** or **DP** having the content item stored therein, and the load value ('load') of the peer **SP** or **DP.**

A content item stored in a peer **SP** or **DP** is divided into one or more files. The URI list ('urilist') includes one or more URIs (Uniform Resource Identifiers) indicating the locations of these files. The attributes of the URI include the part number ('subid') and the file size ('size') of each file.

1.6. Content Management Database

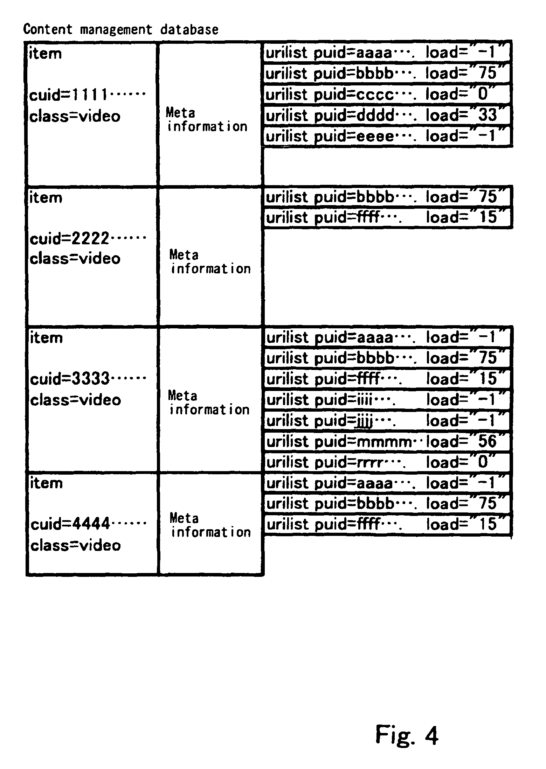

FIG. **4** shows an example of the content management database **26.** The content management database **26** has meta information and one or more URI lists ('urilist') for each content information record ('item'). In the example shown in FIG. **4,** a content item whose unique content ID is "1111..." is stored in peers **SP** or **DP** whose unique peer IDs are "aaaa...", "bbbb...", "cccc...", "dddd..." and "eeee...". For example, the peer **SP** or **DP** whose unique peer ID is "bbbb..." has a load value ('load') of "75". 1.7. Local Database

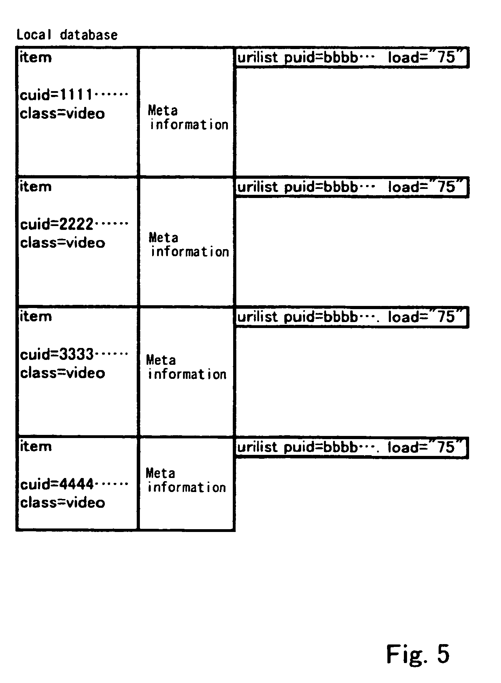

FIG. 5 shows an example of the local database **31** or **42**. The local database **31** or **42** has the meta information and the URI list ('urilist') for each content information record ('item'). The example shown in FIG. 5 is the local database **31** or **42** for the peer **SP** or **DP** whose unique peer ID is "bbbb...".

1.8. Peer Operation Status Database

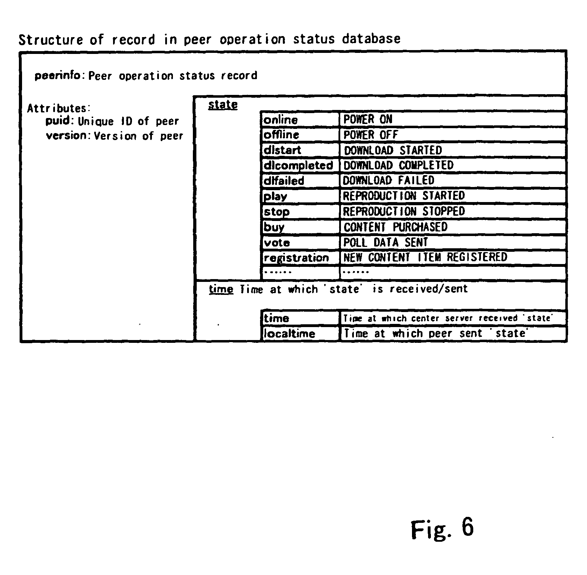

FIG. **6** shows the data structure of a record in the peer operation status database **27.** The peer operation status database **27** includes a number of peer operation status records ('peerinfo'), and the number of peer operation status records is equal to the total number of the static peer **SP** and the dynamic peers **DP.** Each peer operation status record ('peerinfo') includes the peer operation status ('state') representing the operation status of the peer, and the time of sending/receiving ('time') of the peer operation status ('state'). The attributes of the peer operation status record ('peerinfo') include the unique ID ('puid') of the peer and the version ('version') of the peer. The peer operation status ('state') includes various indicators such as POWER ON ('online'), POWER OFF ('offline'), DOWNLOAD STARTED ('distart'), DOWNLOAD COMPLETED ('dlcompleted'), REPRODUCTION STARTED ('play'), REPRODUCTION STOPPED ('stop'), and NEW CONTENT ITEM REGISTERED ('registration'). Operation status indicators such as POWER ON ('online') and POWER OFF ('offline') are commonly used with static and dynamic peers **SP** and **DP.** Operation status indicators such as DOWNLOAD STARTED ('dlstart'), DOWNLOAD COMPLETED ('dlcompleted'), REPRODUCTION STARTED ('play') and REPRODUCTION STOPPED ('stop') are unique to dynamic peers **DP.** The operation status indicator NEW CONTENT ITEM REGISTERED ('registration') is unique to static peers **SP.** 1.9. Peer Load Management Database

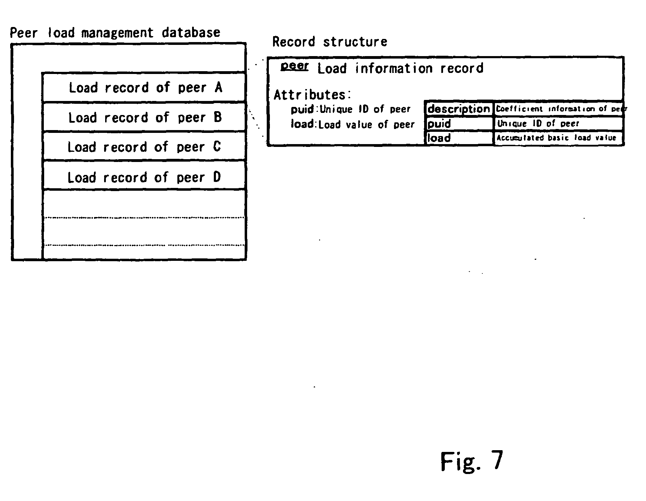

FIG. 7 shows the data structure of a record in the peer load management database **28.** The peer load management database **28** includes a number of load information records ('peer'), and the number of load information records is equal to the total number of the static and dynamic peers **SP** and **DP.** Each load information record ('peer') for a peer includes the load information of the peer. Specifically, the load information of a peer includes coefficient information ('description') of the peer, e.g., the specifications coefficient or the type of the peer (indicating whether the peer is a download-only peer or a peer capable of uploading files), the unique ID ('puid') of the peer, and the accumulated basic load value (load value) ('load'). The attributes of the load information record ('peer') include the unique ID ('puid') of the peer and the load value ('load') of the peer.

While an original copy of the unique ID ('puid') and the load value ('load') is stored in the peer load management database **28,** a duplicate copy of the data is also stored in the content management database **26** as the URI list ('urilist'), as mentioned above.

2. Operation

An operation of the system will now be described.

2. 1. Registration Of New Content Item

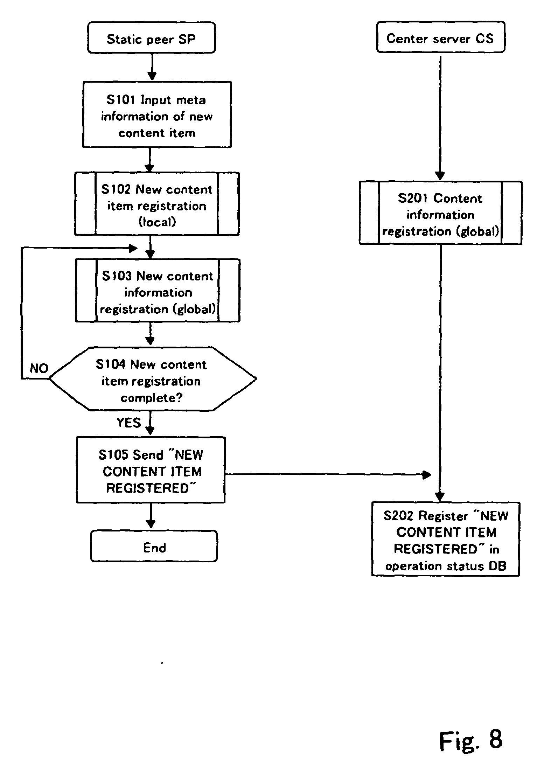

First, an operation of registering a new content item will be described with reference to FIG. **8.**

In the static peer **SP,** the content editing application **32** inputs meta information of the new content item in various fields of the content information record ('item') shown in FIG. 3 (S101). Meta information sent from the monitor client **MC** may be input, or meta information imported from an existing database (not shown) may be input. Alternatively, meta information may be manually input.

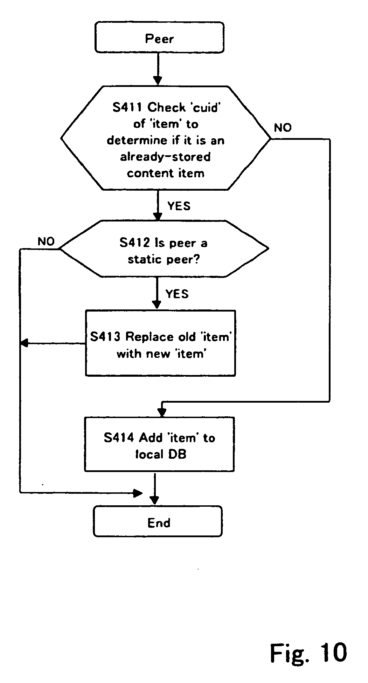

Then, the content editing application **32** registers the new content item uploaded from the monitor client **MC** and the content information thereof in the local database **31** (S102). The details of this operation will be described later (FIG. **10**).

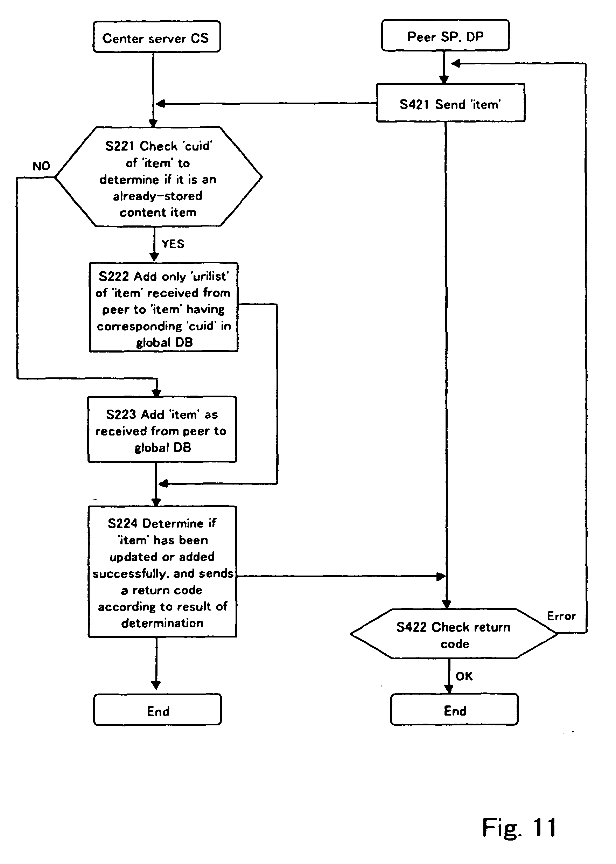

Then, the static peer application **33** sends the registered content information to the center server **CS** (S103). In the center server **CS,** the database application **24** registers the content information sent from the static peer **SP** in the content management database **26** in the global database **21** (S201). The details of this operation will be described later (**FIG. 11**).

When the registration of the new content item is completed (S104), the static peer application **33** sends the operation status NEW CONTENT ITEM REGISTERED ('registration') to the center server **CS** (S105). In the center server CS, the database application **24** registers the operation status NEW CONTENT ITEM REGISTERED ('registration') in the peer operation status database **27** (S202).


2. 2. DOWNLOADING CONTENT ITEM

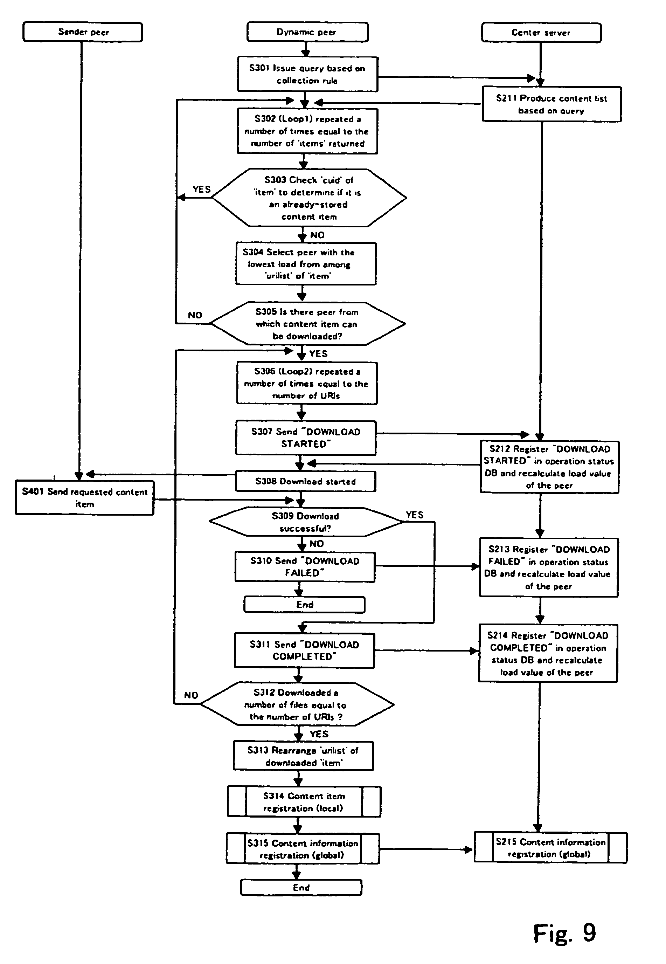

Referring now to FIG. **9,** an operation of downloading a content item will be described.

In a dynamic peer **DP,** the dynamic peer application **44** issues a query to the center server CS based on a predetermined collection rule (S301). In response to this, the database application **24** of the center server **CS** produces a content list based on the query and sends the produced content list to the dynamic peer **DP** which issued the query (S211).

The collection rule for each dynamic peer **DP** is created in advance through the operation by the user of the dynamic peer **DP.** For example, a collection rule may be created based on the name of the director or the name of the leading actor/actress according to the user's preference. Then, the database application **24** performs a search through the content management database **26** by the name of the director or the name of the leading actor/actress to retrieve one or more content information records ('item'), and produces a content list including the content information records ('item').

The dynamic peer application **44** repeats the following steps (steps S303 to S305) a number of times equal to the number of content information records ('item') included in the received content list (S302).

First, the dynamic peer application **44** compares the unique ID ('cuid') of each content item included in the content information record ('item') with the unique ID ('cuid') of each content item registered in the local database **42** of the dynamic peer **DP** to determine whether or not the dynamic peer **DP** already has the listed content item stored therein (S303). If the dynamic peer **DP** already has the listed content item stored therein (YES in S303), the dynamic peer application **44** returns to step S302 to check the next content information record ('item').

If the dynamic peer **DP** does not have the listed content item stored therein (NO in S303), the dynamic peer application **44** selects a URI list ('urilist') that has the smallest load value ('load') (excluding negative load values) from among one or more URI lists ('urilist') included in the content information record ('item'), thus selecting a peer **SP** or **DP** with the lowest load (S304).

If there is no peer from which the content item can be downloaded (NO in S305), the dynamic peer application **44** returns to step S302 to check the next content information record ('item').

If there is a peer from which the content item can be downloaded (YES in S305), the dynamic peer application **44** repeats the following steps (steps S307 to S312) a number of times equal to the number of URIs included in the selected URI list ('urilist') (S306).

First, the dynamic peer application **44** sends the operation status DOWNLOAD STARTED ('dlstart') to the center server **CS** (S307). In response to this, the database application **24** of the center server **CS** registers the operation status DOWNLOAD STARTED ('dlstart') in the peer operation status database **27,** and recalculates the load value of the dynamic peer **DP** to update the load value ('load') in the content management database **26** and the peer load management database **28** (S212).

Then, the dynamic peer application **44** requests the peer **SP** or **DP** with the lowest load to send the content item and downloads the content item (S308). In response to this, the static peer application **33** or the dynamic peer application **44** of the requested peer **SP** or **DP** sends (uploads) the requested content item to the requesting dynamic peer **DP** (S401).

If the download fails (NO in S309), the dynamic peer application **44** sends the operation status DOWNLOAD FAILED ('dlfailed') to the center server **CS** (S310). In response to this, the database application **24** of the center server **CS** registers the operation status DOWNLOAD FAILED ('dlfailed') in the peer operation status database **27,** and recalculates the load value of the dynamic peer **DP** to update the load value ('load') in the content management database **26** and the peer load management database **28** (S213).

If the download is successful (YES in S309), the dynamic peer application **44** sends the operation status DOWNLOAD COMPLETED ('dlcompleted') to the center server **CS** (S311). In response to this, the database application **24** of the center server **CS** registers the operation status DOWNLOAD COMPLETED ('dlcompleted') in the peer operation status database **27,** and recalculates the load value of the dynamic peer **DP** to update the load value ('load') in the content management database **26** and the peer load management database **28** (S214).

These steps (steps S307 to S310) are repeated until one or more files, into which the content item has been divided, are all downloaded (S312).

Then, the dynamic peer application **44** rearranges the URI list ('urilist') of the downloaded content item (S313). Specifically, the dynamic peer application **44** deletes the URIs of the other peers from the URI list of the content item so that there is only the URI of the dynamic peer **DP** in the URI list. Thus, the data size of the content information can be reduced, and the URI of the peer having newly downloaded a content item can be registered in the content management database **26.**

Then, the dynamic peer application **44** registers the downloaded content item and the content information thereof in the local database **42** (S314). The details of this operation will be described later (**FIG. 10).**

Then, the dynamic peer application **44** sends the registered content information to the center server **CS** (S315). In response to this, the database application **24** of the center server **CS** registers the content information sent from the dynamic peer **DP** in the content management database **26** in the global database **21** (S215). The details of this operation will be described later (FIG. **11**).

2. 3. Content Item Registration (Local)

Referring now to FIG. **10,** the content item registration steps S102 and S314 will be described in greater detail.

The static peer application **33** or the dynamic peer application **44** of a peer **SP** or **DP** compares the unique **ID** ('cuid') of each content item included in the content information record ('item') with the unique ID ('cuid') of each content item registered in the local database **42** of the peer **SP** or **DP** to determine whether or not the peer **SP** or **DP** already has the content item stored therein (S411). If the peer **SP** or **DP** already has the content item stored therein (YES in S411) and if the peer is a static peer SP (YES in S412; the new content item registration shown in FIG. **8**), the old content information record ('item') is replaced with the new content information record ('item'), thus updating the content information. If the peer already has the content item stored therein, it is usually unnecessary to update the content information. Nevertheless, in a case where an already-registered piece of meta information (e.g., the name of the director) is erroneous, the erroneously-registered piece of meta information can be corrected by updating the content information.

If the peer **SP** or **DP** does not have the content item stored therein (NO in S411), the peer application **33** or **44** adds the content information record ('item') to the local database **31** or **42** (S414).

2. 4. Content Information Registration (Global)

Referring now to FIG. **11,** the content information registration steps S103 and S315 will be described in greater detail.

The peer application **33** or **44** sends the content information record ('item') to the center server **CS** (S421). In response to this, the database application **24** of the center server **CS** compares the unique ID ('cuid') of each content item included in the content information record ('item') with the unique ID ('cuid') of each content item registered in the content management database **26** to determine whether or not the peer **SP** or **DP** already has the content item stored therein (S221).

If the peer **SP** or **DP** already has the content item stored therein (YES in S221), the database application **24** performs a search through the content management database **26** by the unique ID ('cuid') of the content item, and adds only the URI list ('urilist') of the content information record ('item') sent from the peer **SP** or **DP** to the content information record ('item') having the unique ID ('cuid'), thus updating the content information record ('item') (S222).

If the peer **SP** or **DP** does not have the content item stored therein (NO in S221), the database application **24** adds the content information record ('item') as received from the peer **SP** or **DP** to the content management database **26** (S223).

After the content information record ('item') is updated or added, the database application **24** determines whether or not the content information record ('item') has been updated or added successfully, and sends a predetermined return code to the peer **SP** or **DP** according to the result of the determination (S224). In response to this, the peer application **33** or **44** of the peer **SP** or **DP** checks the return code sent from the center server **CS** (S422). If it is determined that the updating or addition of the content information record ('item') has failed, the application retries to send the content information record ('item') (S421).

2. 5. Example Of How Content Item Is Downloaded

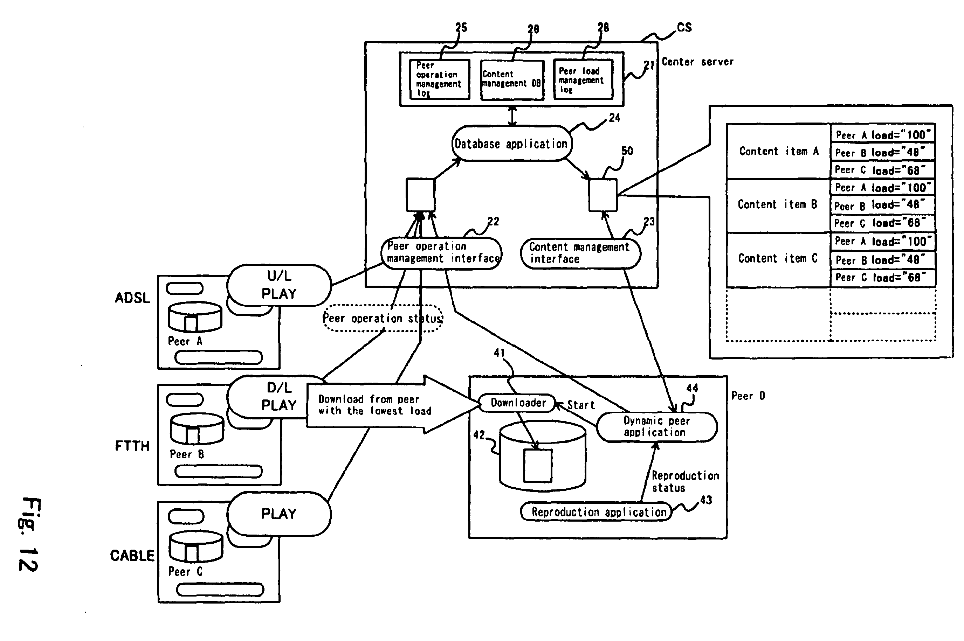

Assume that there are four peers **A, B, C** and **D** (each being either a static or dynamic peer **SP** or **DP**), as shown in FIG. **12,** and the peer **D** (a dynamic peer **DP**) is about to download a content item C from one of the peers **A, B** and **C.** It is also assumed that the peer **A** is connected to the Internet via ADSL and is uploading a file while reproducing a file, the peer **B** is connected to the Internet via FTTH and is downloading a file while reproducing a file, and the peer **C** is connected to the Internet via CATV and is reproducing a file.

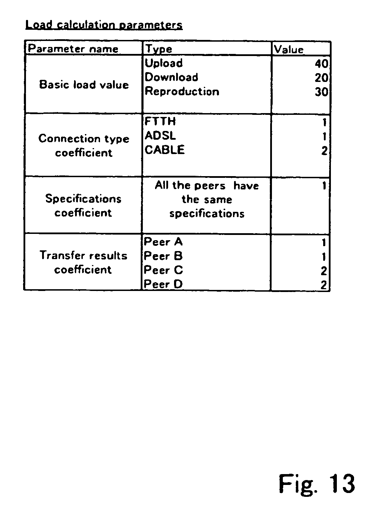

The center server **CS** has a load calculation parameter table as shown in FIG. **13.** In this table, various parameters needed for calculating the load values ('load') of the peers **SP** and **DP** are registered in advance. The load value ('load') is calculated based on Expression 1 below.

Expression 1

Load value = Basic load value × Connection type coefficient × Specifications

coefficient × Transfer results coefficient

In the example shown in FIG. **12,** the load value ('load') of the peer **A** is **118** (≈(40+30) × 1.2 × 1.0 × 1.4), the load value ('load') of the peer **B** is **48** (≈(20+30) × 0.8 × 1.0 × 1.2), and the load value ('load') of the peer C is 68 (≈: 30 × 1.5 × 1.0 × 1.5).

The basic load value of a peer is a numerical value determined according to the operation status of the peer (e.g., uploading a file, downloading a file or reproducing a file). The center server CS registers the basic load value of a peer in the peer load management database 28 based on the peer operation status sent from the peer.

Specifically, in response to the operation status DOWNLOAD STARTED ('dlstart'), the database application **24** increases the basic load value of the file source peer (a peer that is to upload a content item) by 40, and increases the basic load value of the reporting peer (i.e., a peer that has reported its operation status to the center server CS) (a peer that is to download the content item) by 20. In response to the operation status DOWNLOAD COMPLETED ('dicompleted'), the database application **24** decreases the basic load value of the file source peer (a peer that has uploaded the content item) by 40, and decreases the basic load value of the reporting peer (a peer that has downloaded the content item) by 20. In response to the operation status DOWNLOAD FAILED ('dlfailed'), the database application **24** decreases the basic load value of the reporting peer (a peer that has failed to download the content item) by 20, and sets the basic load value of the file source peer to -1. This indicates that the file source peer is off-line and cannot be accessed.

In response to the operation status REPRODUCTION STARTED ('play'), the database application **24** increases the basic load value of the reporting peer (a peer that has started reproducing a file) by 30. In response to the operation status REPRODUCTION STOPPED ('stop'), the database application **24** decreases the basic load value of the reporting peer (a peer that has stopped reproducing a file) by 30.

While only three types of events are listed in the table shown in FIG. **13,** the table may further include other types of events, such as fast forwarding and pausing, together with the associated basic load values.

The connection type coefficient is a weighting coefficient (factor) determined in advance for each peer according to the connection type of the peer. The connection type coefficient is used because the data transfer rate varies depending on the connection type (e.g., FTTH, ADSL or CABLE).

The specifications coefficient is a weighting coefficient (factor) determined in advance for each peer according to the hardware specifications of the peer (the processing power of the CPU, the disk I/O capacity, etc.). In the illustrated example, it is assumed that the peers all have the same level of hardware specifications, and therefore the specifications coefficient is set to 1 for all the peers. The difference between a dedicated file transfer peer provided at an iDC, or the like, and an ordinary peer provided in a user's house may also be reflected in the specifications coefficient.

The transfer results coefficient is a coefficient determined based on the actual results of file transfers in the past. It is preferred that the coefficient is dynamically updated based on the actual results. Alternatively, the coefficient may be manually changed so as to increase/decrease the load on a particular peer.

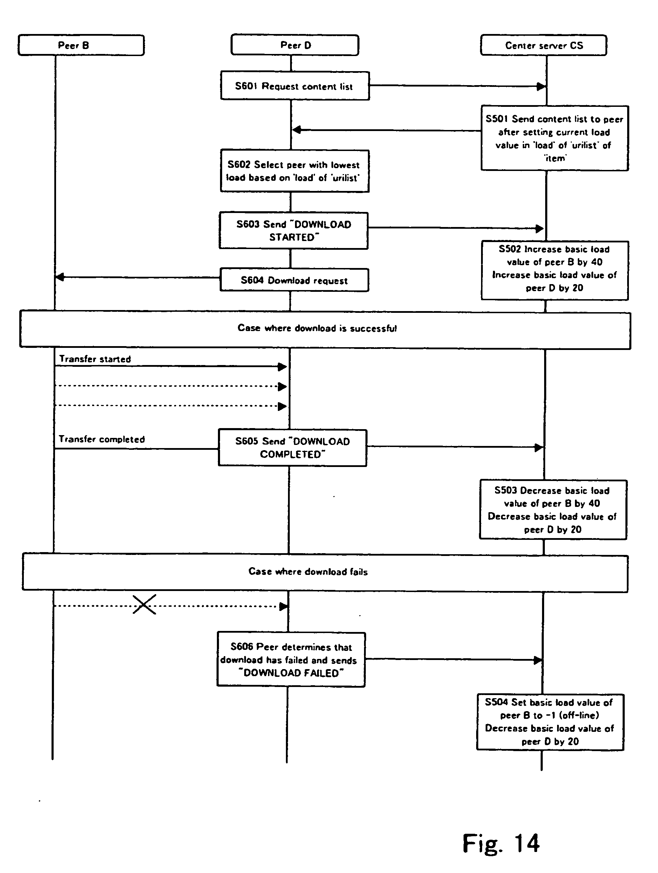

An operation in which the peer **D** downloads the content item C under the following conditions will be described with reference to FIG. **14.**

The peer **D** issues a query to request the center server **CS** to send a content list **50** (S601). In response to the request, the center server **CS** sends the content list **50** to the peer **D** after setting the load value ('load') currently registered in the URI list attribute ('urilist') of the content information record ('item') (S501).

The peer **D** selects the peer **B** with the lowest load from among the load values ('load') of the URI list ('urilist') (S602). The peer **D** sends the operation status DOWNLOAD STARTED to the center server **CS** (S603), and requests the content item C from the peer **B** (S604).

The center server **CS** refers to the load calculation parameter table shown in FIG. **13** to increase the basic load value of the peer **B** which is to upload the content item **C** by 40 and increase the basic load value of the peer **D** which is to download the content item C by 20 (S502).

A case where the download is successful will now be described. The peer **B** starts sending the content item C. In other words, the peer **D** starts downloading the content item C from the peer **B.** When the download of the content item C is complete, the peer **D** sends the operation status DOWNLOAD COMPLETED to the center server **CS** (S605).

When the center server **CS** receives the operation status DOWNLOAD COMPLETED, the center server **CS** decreases the basic load value of the peer **B,** which has finished uploading the content item C, by 40 and decreases the basic load value of the peer D, which has finished downloading the content item C, by 20 (S503).

A case where the download fails will now be described. The peer **D** determines that the download has failed based on the occurrence of a connection failure or a connection timeout, in which case the peer **D** sends the operation status DOWNLOAD FAILED to the center server **CS** (S606).

When the center server **CS** receives the operation status DOWNLOAD FAILED, the center server **CS** sets the basic load value of the peer **B,** from which content items cannot be downloaded, to -1 ("off-line") and decreases the basic load value of the peer **D,** which has failed to download the content item C, by 20 (S504).

As described above, according to the embodiment of the present invention, the center server **CS** collects content information records ('item') from the peers **SP** and **DP.** The collected content information records ('item') can be sent to a dynamic peer **DP** in response to a query issued from the dynamic peer **DP.** Thus, a dynamic peer **DP** can obtain the URI of another peer **SP** or **DP** that has a desired content item stored therein, and can download the desired content item from the peer **SP** or **DP.** Since the load value of each peer **SP** or **DP** is set in the URI list attribute ('urilist') included in the content information record ('item'), a dynamic peer **DP** can select another peer **SP** or **DP** with the lowest load and download the desired content item from the selected peer **SP** or **DP.** Therefore, download requests are prevented from being concentrated at a particular peer **SP** or **DP,** and the content file transfer loads can be distributed among a number of peers. Since the operation status of each dynamic peer **DP** is reported to the center server **CS,** content items can be distributed while protecting the copyrights thereof.

While the unique IDs ('puid') of the peers **SP** and **DP** and the load values ('load') of the peers **SP** and **DP** are stored also in the content management database 26 in the embodiment described above, it is not necessary that they are stored therein as long as they are stored in the peer load management database **28.**

In the embodiment described above, one peer with the lowest load is selected and a content item is downloaded from the selected peer. Alternatively, one peer may be selected simply based on the operation status of the peer (e.g., a peer that is not being uploading a file), and a content item may be downloaded from the selected peer. In a case where one peer is selected based on the operation status thereof, a peer with a smallest basic load value relating to the operation status (e.g., uploading, downloading, reproducing, standby) may be selected based only on the basic load value relating to the operation status among other parameters shown in FIG. **13,** i.e., without taking into consideration the connection type coefficient, the specifications coefficient and the transfer results coefficient.

While the selection of a peer with the lowest load is made by a dynamic peer **DP** (S304), the selection can alternatively be made by the center server **CS.** In such a case, the content list sent from the center server **CS** to the dynamic peer **DP** only needs to include the URI of the peer with the lowest load. Specifically, in step S211 described above, the center server **CS** selects a peer with the lowest load based on the content management database **26** and the peer load management database **28,** and produces a content list including the URI of the peer. In such a case, the dynamic peer **DP** selects a peer, which has been selected by the center server **CS.** In other words, a peer, which is selected by the center server **CS** based on the load information, is selected again by the dynamic peer **DP.** Where there are two peers with the lowest load, for example, it may be the case that the center server **CS** selects the two peers, and then the dynamic peer **DP** selects one of the two peers.

Alternatively, the center server **CS** may send the dynamic peer **DP** a content list in which content information records ('item') including URIs of peers are rearranged in the order of load, instead of the center server **CS** selecting one peer with the lowest load. In such a case, the dynamic peer **DP** can automatically select the peer with the lowest load by selecting the first peer in the content list. Alternatively, the center server **CS** may rearrange the content information records ('item') in the order of load, and select ten content information records ('item') therefrom with lowest load values. Then, even if there are many peers having a requested content item stored therein, it is possible to prevent the data size of the content list from being so large that it may congest the communications line.

While a content item is sent from a dynamic peer or a static peer to a requesting dynamic peer in response to a request from the requesting dynamic peer in the embodiment described above, a content item may be sent automatically from the sender peer (dynamic or static) to the requesting dynamic peer in response to an instruction from the center server, etc. The content information and the load information may also be sent automatically from the center server to the dynamic peer.

While the present invention has been described above in a preferred embodiment, it is understood that the embodiment is merely illustrative of how the invention may be carried out, and it is apparent to those skilled in the art that variations and modifications thereof can be made without departing from the spirit and scope of the invention.

The peer-to-peer-type content distribution system of the present invention is applicable to content distribution services using the Internet.

**Claims**

1. A center server (CS) connected to a plurality of dynamic peers (DP) and to one or more static peers (SP), each of the plurality of dynamic peers (DP) and the one or more static peers (SP) storing a plurality of content items, comprising:

    a global storage section (21) for storing content information regarding particulars and a location of each content item stored in each dynamic peer (DP) and in each static peer (SP) and load information regarding a load on the dynamic peers (DP);
    a content information registration section (24) for registering the content information received from the dynamic peers (DP) and from the one or more static peers (SP) in the global storage section (21);
    a load information registration section (24) for registering, in the global storage section (21), the load information of the dynamic peers (DP) according to an operation status received from the dynamic peers (DP); and
    an information returning section (24) for returning, in response to a request from a dynamic peer (DP), the content information of the dynamic peers (DP) or of the static peers (SP) and the load information of the dynamic peers (DP) which store the content item specified by the content information to the dynamic peer (DP).

2. The center server (CS) according to claim 1, wherein:

    the content information of a content item includes meta information regarding particulars of the content item and location information regarding a location of the content item;
    the location information includes identification information regarding an identification of each peer having the content item stored therein and load information regarding a load on the peer.

3. The center server (CS) according to claim 1 or 2, wherein:

    the load information registration section (24) calculates the load information of a dynamic peer (DP) based on the operation status of the dynamic peer (DP), and registers the calculated load information in the global storage section (21).

4. The center server (CS) according to any one of claims 1 to 3, wherein in response to a request from a dynamic peer (DP), the information returning section (24) performs a search through the global storage section (21) to retrieve content information and load information, so as to produce a content list including the retrieved content information and load information and send the produced content list to the dynamic peer (DP).

5. A static peer (SP) connected to a center server (CS) that is connected to a plurality of dynamic peers (DP), comprising:

    a section for registering content items and content information for the content items;
    a local storage section (31) for storing the content items;
    a section (32) for registering a content item in the local storage section (31);
    a section (33) for sending content information of the registered content item to the center server (CS);
    a section (33) for sending an operation status of the static peer (SP) to the center server (CS);
    a section for obtaining a request from a dynamic peer (DP) with respect to a content item; and
    a section for sending the desired content item to the requesting dynamic peer (DP).

6. A dynamic peer (DP) connected to a center server (CS) being connected to one or more dynamic peers (DP) and to one or more static peers (SP), comprising:

    a local storage section (42) for storing a plurality of content items;
    a section (44) for requesting and obtaining, from the center server (CS), content information regarding particulars and a location of each content item stored in each dynamic peer (DP) and in each static peer (SP) and load information regarding a load on the dynamic peers (DP);
    a section (44) for selecting one or more sender peers, being one or more of the one or more dynamic peers (DP) or of the one ore more static peers (SP), having a desired content item stored therein based on the obtained content information, and for further selecting one sender peer, from among the selected one or more sender peers, based on the obtained load information;
a section (41) for downloading the desired content item from the selected sender peer;
a section for registering the downloaded content item in the local storage section (42);
a section (44) for sending content information of the registered content item to the center server (CS);
a section (44) for sending an operation status of the dynamic peer (DP) to the center server (CS); and
a section for uploading a desired content item to other dynamic peers (DP).

7. The dynamic peer (DP) according to claim 6, wherein:

the content information of a content item includes meta information regarding particulars of the content item and location information regarding a location of the content item;
the location information includes identification information regarding an identification of each peer having the content item stored therein and load information regarding a load on the peer.

8. A peer-to-peer-type content distribution system comprising one center server (CS) according to any of claims 1 to 4, several dynamic peers (DP) according to claim 6 or 7, and several static peers (SP) according to claim 5, the center server (CS), the dynamic peers (DP) and the static peers (SP) all being interconnected.

9. The peer-to-peer-type content distribution system according to claim 8, wherein:

the content information of a content item includes meta information regarding particulars of the content item and location information regarding a location of the content item;
the location information includes identification information regarding an identification of each peer having the content item stored therein and load information regarding a load on the peer.

10. The peer-to-peer-type content distribution system according to claim 8 or 9, wherein:

the load information registration section (24) calculates the load information of a dynamic peer (DP) based on the operation status of the dynamic peer (DP), and registers the calculated load information in the global storage section (21).

11. The peer-to-peer-type content distribution system according to any one of claims 8 to 10, wherein in response to a request from a dynamic peer (DP), the information returning section (24) performs a search through the global storage section (21) to retrieve content information and load information, so as to produce a content list including the retrieved content information and load information and send the produced content list to the dynamic peer (DP).

12. A method for downloading a content item with a dynamic peer (DP) connected to a center server (CS) being connected to one or more dynamic peers (DP) and to one or more static peers (SP), the method comprising the steps of:

obtaining, from the center server (CS), content information regarding particulars and a location of each content item stored in each dynamic peer (DP) and in each static peer (SP) and load information regarding a load on the dynamic peers (DP);
selecting one or more sender peers, being one or more of the one or more dynamic peers (DP) or one or more of the one or more static peers (SP), having a desired content item stored therein based on the obtained content information, and further selecting one sender peer, from among the selected one or more sender peers, based on the obtained load information;
downloading the desired content item from the selected peer;
registering the downloaded content item in the dynamic peer (DP);
sending content information of the registered content item to the center server (CS);
sending an operation status of the dynamic peer (DP) to the center server (CS); and
uploading a desired content item to other dynamic peers (DP).

13. A computer program product for use in a dynamic peer (DP) connected to a center server (CS) being connected to one or more dynamic peers (DP), the computer program instructing the dynamic peer (DP) to perform all steps of the method according to claim 12, when processed in the processor of the dynamic peer.

**EP 1 630 684 B1**

**Patentansprüche**

1. Zentraler Server (CS), der an einer Vielzahl von dynamischen Peers (DP) und an einen oder mehreren statischen Peer(s) (SP) angeschlossen ist, wobei jeder Peer der Vielzahl der dynamischen Peers (DP) und der eine oder die mehreren statische(n) Peer(s) (SP) eine Vielzahl von Inhaltseinzelheiten speichern, umfassend:

   einen globalen Speicherungsabschnitt (21) zum Speichern einer Inhaltsinformation betreffend Besonderheiten und eine Position jeder Inhaltseinzelheit, die in jedem dynamischen Peer (DP) und in jedem statischen Peer (SP) gespeichert ist, und eine Auslastungsinformation betreffend eine Auslastung an den dynamischen Peers (DP);
   einen Inhaltsinformations-Registrierungsabschnitt (24) zum Registrieren der Inhaltsinformation, die von den dynamischen Peers (DP) und dem einen oder den mehreren statischen Peer(s) (SP) in dem globalen Speicherungsabschnitt (21) empfangen wird;
   einen Auslastungsinformations-Registrierungsabschnitt (24) zum Registrieren, in dem globalen Speicherungsabschnitt (21), der Auslastungsinformation der dynamischen Peers (DP) entsprechend einem Arbeitszustand, die von den dynamischen Peers (DP) empfangen wird; und
   einen Informations-Rückführungsabschnitt (24) zum Zurückführen, in Reaktion auf eine Anforderung von einem dynamischen Peer (DP), der Inhaltsinformation der dynamischen Peers (DP) oder der statischen Peers (SP) und der Auslastungsinformation der dynamischen Peers (DP), in denen die Inhaltseinzelheit gespeichert ist, die durch die Inhaltsinformation spezifiziert ist, an die dynamischen Peers (DP).

2. Zentraler Server (CS) nach Anspruch 1, wobei:

   die Inhaltsinformation einer Inhaltseinzelheit eine Metainformation betreffend Besonderheiten der Inhaltseinzelheit und eine Positionsinformation betreffend eine Position der Inhaltseinzelheit enthält;
   die Positionsinformation eine Identifikationsinformation betreffend eine Identifikation jedes Peers, in dem die Inhaltseinzelheit gespeichert ist, und eine Auslastungsinformation betreffend die Auslastung an dem Peer enthält.

3. Zentraler Server (CS) nach Anspruch 1 oder 2, wobei
   der Auslastungsinformations-Registrierungsabschnitt (24) die Auslastungsinformation eines dynamischen Peers (DP) auf der Grundlage des Arbeitszustandes des dynamischen Peers (DP) berechnet und die berechnete Auslastungsinformation in dem globalen Speicherungsabschnitt (21) registriert.

4. Zentraler Server (CS) nach einem der Ansprüche 1 bis 3, wobei in Reaktion auf eine Anforderung von einem dynamischen Peer (DP) der Informations-Rückführungsabschnitt (24) eine Suche in dem globalen Speicherungsabschnitt (21) zum Wiedergewinnen der Inhaltsinformation und der Auslastungsinformation durchführt, um eine Inhaltsliste, die die wiedergewonnene Inhaltsinformation und Auslastungsinformation enthält, zu erstellen und um die erstellte Inhaltsliste an den dynamischen Peer (DP) zu senden.

5. Statischer Peer (SP), der an einen zentralen Server (CS) angeschlossen ist, der an einer Vielzahl von dynamischen Peers (DP) angeschlossen ist, umfassend:

   einen Abschnitt zum Registrieren von Inhaltseinzelheiten und einer Inhaltsinformation für die Inhaltseinzelheiten;
   einen lokalen Speicherungsabschnitt (31) zum Speichern der Inhaltseinzelheiten;
   einen Abschnitt (32) zum Registrieren einer Inhaltseinzelheit in dem lokalen Speicherungsabschnitt (31);
   einen Abschnitt (33) zum Senden der Inhaltsinformation der registrierten Inhaltseinzelheit an den zentralen Server (SC);
   einen Abschnitt (33) zum Senden eines Arbeitszustands des statischen Peers (SP) an den zentralen Server (SC);
   einen Abschnitt zum Empfangen einer Anforderung von einem dynamischen Peer (DP) in Hinblick auf eine Inhaltseinzelheit; und
   einen Abschnitt zum Senden der gewünschten Inhaltsinformation an den eine Anforderung stellenden dynamischen Peer (DP).

6. Dynamischer Peer (DP), der an einen zentralen Server (CS) angeschlossen ist, der an einen oder mehreren dynamischen Peer(s) (DP) und einen oder mehreren statischen Peer(s) (SP) angeschlossen ist, umfassend:

   einen lokalen Speicherungsabschnitt zum Speichern einer Vielzahl von Inhaltseinzelheiten;

13

einen Abschnitt (44) zum Anfordern und zum Empfangen, von dem zentralen Server (CS), einer Inhaltsinformation betreffend Besonderheiten und eine Position jeder Inhaltseinzelheit, die in jedem dynamischen Peer (DP) und in jedem statischen Peer (SP) gespeichert ist, und einer Auslastungsinformation betreffend eine Auslastung an den dynamischen Peer (DP);

einen Abschnitt (44) zum Auswählen eines oder mehrerer Senderpeers, der bzw. die der eine oder die mehreren dynamische(n) Peer(s) (DP) oder der eine oder die mehreren statische(n) Peer(s) (SP) ist bzw. sind, in dem bzw. in denen eine gewünschte Inhaltseinzelheit gespeichert ist, auf der Grundlage der empfangenen Inhaltsinformation und des Weiteren zum Auswählen eines Senderpeers, aus dem einen bzw. den mehreren ausgewählten Senderpeers auf der Grundlage der empfangenen Auslastungsinformation;

einen Abschnitt (41) zum Downloaden der gewünschten Inhaltseinzelheit von dem ausgewählten Senderpeer;

einen Abschnitt zum Registrieren der downgeloadeten Inhaltseinzelheit in dem lokalen Speicherabschnitt (42);

einen Abschnitt (44) zum Senden der Inhaltsinformation der registrierten Inhaltseinzelheit an den zentralen Server (CS);

einen Abschnitt (44) zum Senden eines Arbeitszustands des dynamischen Peers (DP) an den zentralen Server (CS); und

einen Abschnitt zum Uploaden einer gewünschten Inhaltseinzelheit an andere dynamische Peers (DP).

7.  Dynamischer Peer (DP) nach Anspruch 6, wobei:

die Inhaltsinformation einer Inhaltseinzelheit eine Metainformation betreffend Besonderheiten der Inhaltseinzelheit und eine Positionsinformation betreffend eine Position der Inhaltseinzelheit enthält;

die Positionsinformation eine Identifikationsinformation betreffend eine Identifikation jedes Peers, in dem die Inhaltseinzelheit gespeichert ist, und eine Auslastungsinformation betreffend die Auslastung an dem Peer enthält.

8.  Peer-to-Peer-Inhaltsverteilungssystem, das einen zentralen Server (CS) nach einem der Ansprüche 1 bis 4, mehrere dynamische Peers (DP) nach Anspruch 6 oder 7 und mehrere statische Peers (SP) nach Anspruch 5 aufweist, wobei der zentrale Server (CS), die dynamischen Peers (DP) und die statischen Peers (SP) alle aneinander angeschlossen sind.

9.  Peer-to-Peer-Inhaltsverteilungssystem nach Anspruch 8, wobei:

die Inhaltsinformation einer Inhaltseinzelheit eine Metainformation betreffend Besonderheiten der Inhaltseinzelheit und eine Positionsinformation betreffend die Position der Inhaltseinzelheit enthält;

die Positionsinformation eine Identifikationsinformation betreffend eine Identifikation jedes Peers, in dem die Inhaltseinzelheit gespeichert ist, und eine Auslastungsinformation betreffend die Auslastung an dem Peers enthält.

10.  Peer-to-Peer-Inhaltsverteilungssystem nach Anspruch 8 oder 9, wobei:

der Auslastungsinformations-Registrierungsabschnitt (24) die Auslastungsinformation eines dynamischen Peers (DP) auf der Grundlage des Arbeitszustandes des dynamischen Peers (DP) berechnet und die berechnete Auslastungsinformation in dem globalen Speicherungsabschnitt (21) registriert.

11.  Peer-to-Peer-Inhaltsverteilungssystem nach einem der Ansprüche 8 bis 10, wobei in Reaktion auf eine Anforderung von einem dynamischen Peer (DP) der Informations-Rückführungsabschnitt (24) eine Suche in dem globalen Speicherungsabschnitt (21) zum Wiedergewinnen der Inhaltsinformation und der Auslastungsinformation durchführt, um eine Inhaltsliste, die die wiedergewonnene Inhaltsinformation und Auslastungsinformation enthält, zu erstellen und um die erstellte Inhaltsliste an den dynamischen Peer (DP) zu senden.

12.  Verfahren zum Downloaden einer Inhaltseinzelheit mit einem dynamischen Peer (DP), der an einen zentralen Server (CS) angeschlossen ist, der an einen oder mehreren dynamischen Peer(s) (DP) und einen oder mehreren statischen Peer(s) (SP) angeschlossen ist, wobei das Verfahren folgende Schritte umfasst:

Empfangen, von den zentralen Server (CS), einer Inhaltsinformation betreffend Besonderheiten und eine Position jeder Inhaltseinzelheit, die in jedem dynamischen Peer (DP) und in jedem statischen Peer (SP) gespeichert ist, und einer Auslastungsinformation betreffend eine Auslastung an den dynamischen Peers (DP);

Auswählen eines oder mehrerer Senderpeers, der bzw. die der eine oder die mehreren dynamische(n) Peer(s) (DP) oder der eine oder die mehreren statische(n) Peer(s) (SP) ist bzw. sind, in dem bzw. in denen eine gewünschte Inhaltseinzelheit gespeichert ist, auf der Grundlage der empfangenen Inhaltsinformation und des Weiteren Auswählen eines Senderpeers, aus dem einen bzw. den mehreren ausgewählten Senderpeer(s), auf der Grundlage der empfangenen Auslastungsinformation;

Downloaden der gewünschten Inhaltseinzelheit von dem ausgewählten Peer;

Registrieren der downgeloadeten Inhaltseinzelheit in dem dynamischen Peer (DP);

Senden der Inhaltsinformation der registrierten Inhaltseinzelheit an den zentralen Servern (CS);

Senden eines Arbeitszustands des dynamischen Peers (DP) an den zentralen Server (CS); und

Uploaden einer gewünschten Inhaltseinzelheit an andere dynamische Peers (DP).

13. Computerprogrammprodukt zur Verwendung in einem dynamischen Peer (DP), der an einen zentralen Server (CS) angeschlossen ist, der an einen oder mehreren dynamischen Peer(s) (DP) angeschlossen ist, wobei das Computerprogramm den dynamischen Peer (DP) instruiert, alle Schritte des Verfahrens nach Anspruch 12 durchzuführen, wenn es in dem Prozessor des dynamischen Peers verarbeitet wird.

**Revendications**

1. Serveur central (CS) connecté à une pluralité de postes dynamiques (DP) et à un ou plusieurs postes statiques (SP), chaque poste dynamique de la pluralité de postes dynamiques (DP) et le ou les postes statiques (SP) stockant une pluralité d'éléments de contenu, comprenant :

une section de stockage globale (21) permettant de stocker des informations de contenu concernant des éléments particuliers et un emplacement de chaque élément de contenu stocké dans chaque poste dynamique (DP) et dans chaque poste statique (SP) et des informations de charge concernant une charge des postes dynamiques (DP) ;

une section d'enregistrement d'informations de contenu (24) permettant d'enregistrer des informations de contenu reçues des postes dynamiques (DP) et du ou des postes statiques (SP) dans la section de stockage globale (21) ;

une section d'enregistrement d'informations de charge (24) permettant d'enregistrer, dans la section de stockage globale (21), les informations de charge des postes dynamiques (DP) en fonction d'un état de fonctionnement reçu des postes dynamiques (DP) ; et

une section de renvoi d'informations (24) permettant de renvoyer, en réponse à une demande d'un poste dynamique (DP), les informations de contenu des postes dynamiques (DP) ou des postes statiques (SP) et des informations de charge des postes dynamiques (DP) stockant l'élément de contenu spécifié par les informations de contenu au poste dynamique (DP).

2. Serveur central (CS) selon la revendication 1, dans lequel :

les informations de contenu d'un élément de contenu comportent des méta-informations concernant des éléments particuliers de l'élément de contenu et les informations d'emplacement concernant un emplacement de l'élément de contenu ;

les informations d'emplacement comportent des informations d'identification concernant l'identification de chaque poste dans lequel est stocké l'élément de contenu et des informations de charge concernant une charge du poste.

3. Serveur central (CS) selon la revendication 1 ou 2, dans lequel :

la section d'enregistrement d'informations de charge (24) calcule les informations de charge d'un poste dynamique (DP) sur la base de l'état de fonctionnement du poste dynamique (DP), et enregistre des informations de charge calculées dans la section de stockage globale (21).

4. Serveur central (CS) selon l'une quelconque des revendications 1 à 3, dans lequel en réponse à une demande d'un poste dynamique (DP), la section de renvoi d'informations (24) effectue une recherche dans la section de stockage globale (21) pour récupérer des informations de contenu et des informations de charge, de manière à produire une liste de contenu comportant des informations de contenu et des informations de charge récupérées et envoyer la liste de contenu produite au poste dynamique (DP).

**5.** Poste statique (DP) connecté à un serveur central (CS) qui est connecté à une pluralité de postes dynamiques (DP), comprenant :

une section permettant d'enregistrer des éléments de contenu et des informations de contenu pour les éléments de contenu ;
une section de stockage locale (31) permettant de stocker les éléments de contenu ;
une section (32) permettant d'enregistrer un élément de contenu dans la section de stockage locale (31) ;
une section (33) permettant d'envoyer des informations de contenu de l'élément de contenu enregistré au serveur central (CS) ;
une section (33) permettant d'envoyer un état de fonctionnement du poste statique (SP) au serveur central (CS) ;
une section permettant d'obtenir une demande d'un poste dynamique (DP) par rapport à un élément de contenu ; et
une section permettant d'envoyer l'élément de contenu souhaité au poste dynamique demandeur (DP).

**6.** Poste dynamique (DP) connecté au serveur central (CS) qui est connecté à un ou plusieurs postes dynamiques (DP) et à un ou plusieurs postes statiques (SP), comprenant :

une section de stockage locale (42) permettant de stocker une pluralité d'éléments de contenu ;
une section (44) permettant de demander et d'obtenir, du serveur central (CS), des informations de contenu concernant des éléments particuliers et un emplacement de chaque élément de contenu stocké dans chaque poste dynamique (DP) et dans chaque poste statique (SP) et des informations de charge concernant une charge des postes dynamiques (DP) ;
une section (44) permettant de sélectionner un ou plusieurs postes expéditeurs, qui constituent un ou plusieurs des un ou plusieurs postes dynamiques (DP) ou des un ou plusieurs postes statiques (SP), dans lesquels est stocké un élément de contenu souhaité sur la base des informations de contenu obtenues et de sélectionner en outre un poste expéditeur parmi le ou les postes expéditeurs sélectionnés, sur la base des informations de charge obtenues ;
une section (41) permettant de télécharger l'élément de contenu souhaité à partir du poste expéditeur sélectionné ;
une section permettant d'enregistrer l'élément de contenu téléchargé dans la section de stockage locale (42) ;
une section (44) permettant d'envoyer des informations de contenu de l'élément de contenu enregistré au serveur central (CS) ;
une section (44) permettant d'envoyer un état de fonctionnement du poste dynamique (DP) au serveur central (CS) ; et
une section permettant de télécharger un élément de contenu souhaité dans d'autres postes dynamiques (DP).

**7.** Poste dynamique (DP) selon la revendication 6, dans lequel :

les informations de contenu d'un élément de contenu comportent des méta-informations concernant des éléments particuliers de l'élément de contenu et des informations d'emplacement concernant un emplacement de l'élément de contenu ;
les informations d'emplacement comportent des informations d'identification concernant une identification de chaque poste dans lequel est stocké un élément de contenu et des informations de charge concernant une charge du poste.

**8.** Système de distribution de contenu de type poste à poste comprenant un serveur central (CS) selon l'une quelconque des revendications 1 à 4, plusieurs postes dynamiques (DP) selon la revendication 6 ou 7 et plusieurs postes statiques (SP) selon la revendication 5, le serveur central (CS), les postes dynamiques (DP) et les postes statiques (SP) étant tous interconnectés.

**9.** Système de distribution de contenu de type poste à poste selon la revendication 8, dans lequel :

les informations de contenu d'un élément de contenu comportent des méta-informations concernant des éléments particuliers de l'élément de contenu et des informations d'emplacement concernant un emplacement de l'élément de contenu ;
les informations d'emplacement comportent des informations d'identification concernant l'identification de chaque poste dans lequel est stocké l'élément de contenu et des informations de charge concernant une charge du poste.

**10.** Système de distribution de contenu de type poste à poste selon la revendication 8 ou 9, dans lequel :

la section d'enregistrement d'informations de charge (24) calcule les informations de charge d'un poste dynamique (DP) sur la base de l'état de fonctionnement du poste dynamique (DP) et enregistre les informations de charge calculées dans la section stockage globale (21).

**11.** Système de distribution de contenu de type poste à poste selon l'une quelconque des revendications 8 à 10, dans lequel en réponse à une demande d'un poste dynamique (DP), la section de renvoi d'informations (24) effectue une recherche dans la section de stockage globale (21) pour récupérer des informations de contenu et des informations de charge, de manière à produire une liste de contenu comportant les informations de contenu récupérées et les informations de charge récupérées et envoyer la liste de contenu produite au poste dynamique (DP).

**12.** Procédé permettant de télécharger vers l'aval un élément de contenu, un poste dynamique (DP) étant connecté à un serveur central (CS) qui est connecté à un ou plusieurs postes dynamiques (DP) et à un ou plusieurs postes statiques (SP), le procédé comprenant les étapes consistant à :

obtenir, du serveur central (CS), des informations de contenu concernant des éléments particuliers et un emplacement de chaque élément de contenu stocké dans chaque poste dynamique (DP) et dans chaque poste statique (SP) et des informations de charge concernant une charge des postes dynamiques (DP) ;
sélectionner un ou plusieurs postes expéditeurs, correspondant à un ou plusieurs des un ou plusieurs postes dynamiques (DP) ou un ou plusieurs des postes statiques (SP), dans lesquels est stocké un élément de contenu souhaité sur la base des informations de contenu obtenues et sélectionner en outre un poste expéditeur parmi le ou les postes expéditeurs sélectionnés sur la base des informations de charge obtenues ;
télécharger l'élément de contenu souhaité à partir du poste sélectionné ;
enregistrer l'élément de contenu téléchargé dans le poste dynamique (DP) ;
envoyer les informations de contenu de l'élément de contenu enregistré au serveur central (CS) ;
envoyer un état de fonctionnement du poste dynamique (DP) au serveur central (CS) ; et
télécharger un élément de contenu souhaité dans d'autres postes dynamiques (DP).

**13.** Produit de programme informatique pouvant être utilisé dans un poste dynamique (DP) connecté à un serveur central (CS) qui est connecté à un ou plusieurs postes dynamiques (DP), le programme informatique demandant au poste dynamique (DP) d'exécuter toutes les étapes du procédé selon la revendication 12, lorsque celles-ci sont traitées dans le processeur du poste dynamique.

Flow of information

Flow of content items

Fig. 1

Fig. 2

Structure of record in content management database

item: Content information record

Attribute :
cuid: Unique ID of content item

class: Type of item

Meta information

| Title |
| Original title |
| Director |
| Leading actor/actress |
| ......... |
| Thumbnail URL |
| Jacket URL |
| ......... |
| ......... |
| Release in theaters |
| Distribution start |
| Distribution end |
| ......... |

urilist: URI list

Attributes:
puid:Unique ID of peer
load:Load value

URI attributes:

| subid: Part number |
| size: File size |
| ......... |

Fig. 3

Content management database

| item<br><br>cuid=1111······<br>class=video | Meta<br>information | urilist puid=aaaa···. load="−1" |
| | | urilist puid=bbbb···. load="75" |
| | | urilist puid=cccc···. load="0" |
| | | urilist puid=dddd···. load="33" |
| | | urilist puid=eeee···. load="−1" |
| item<br><br>cuid=2222······<br>class=video | Meta<br>information | urilist puid=bbbb···. load="75" |
| | | urilist puid=ffff···. load="15" |
| item<br><br>cuid=3333······<br>class=video | Meta<br>information | urilist puid=aaaa···. load="−1" |
| | | urilist puid=bbbb···. load="75" |
| | | urilist puid=ffff···. load="15" |
| | | urilist puid=iiii···. load="−1" |
| | | urilist puid=jjjj···. load="−1" |
| | | urilist puid=mmmm··load="56" |
| | | urilist puid=rrrr···. load="0" |
| item<br><br>cuid=4444······<br>class=video | Meta<br>information | urilist puid=aaaa···. load="−1" |
| | | urilist puid=bbbb···. load="75" |
| | | urilist puid=ffff···. load="15" |

Fig. 4

Local database

| item | | |
|---|---|---|
| cuid=1111······ class=video | Meta information | urilist puid=bbbb··· load="75" |
| item cuid=2222······ class=video | Meta information | urilist puid=bbbb··· load="75" |
| item cuid=3333······ class=video | Meta information | urilist puid=bbbb···. load="75" |
| item cuid=4444······ class=video | Meta information | urilist puid=bbbb···. load="75" |

Fig. 5

Structure of record in peer operation status database

| peerinfo: Peer operation status record | | | |
|---|---|---|---|
| Attributes:<br>puid: Unique ID of peer<br>version: Version of peer | state | | |
| | | online | POWER ON |
| | | offline | POWER OFF |
| | | dlstart | DOWNLOAD STARTED |
| | | dlcompleted | DOWNLOAD COMPLETED |
| | | dlfailed | DOWNLOAD FAILED |
| | | play | REPRODUCTION STARTED |
| | | stop | REPRODUCTION STOPPED |
| | | buy | CONTENT PURCHASED |
| | | vote | POLL DATA SENT |
| | | registration | NEW CONTENT ITEM REGISTERED |
| | | ...... | ...... |
| | time Time at which 'state' is received/sent | | |
| | | time | Time at which center server received 'state' |
| | | localtime | Time at which peer sent 'state' |

Fig. 6

Peer load management database

Record structure

| Load record of peer A |
|---|
| Load record of peer B |
| Load record of peer C |
| Load record of peer D |
|  |
|  |
|  |

peer Load information record

Attributes:
  puid:Unique ID of peer
  load:Load value of peer

| description | Coefficient information of peer |
|---|---|
| puid | Unique ID of peer |
| load | Accumulated basic load value |

Fig. 7

Static peer SP

Center server CS

S101 Input meta information of new content item

S102 New content item registration (local)

S201 Content information registration (global)

S103 New content information registration (global)

S104 New content item registration complete?

NO

YES

S105 Send "NEW CONTENT ITEM REGISTERED"

S202 Register "NEW CONTENT ITEM REGISTERED" in operation status DB

End

Fig. 8

| Sender peer | Dynamic peer | Center server |
|---|---|---|

**Dynamic peer:**

S301 Issue query based on collection rule

S302 (Loop1) repeated a number of times equal to the number of 'items' returned

S303 Check 'cuid' of 'item' to determine if it is an already-stored content item — YES / NO

S304 Select peer with the lowest load from among 'urilist' of 'item'

S305 Is there peer from which content item can be downloaded? — NO / YES

S306 (Loop2) repeated a number of times equal to the number of URIs

S307 Send "DOWNLOAD STARTED"

S308 Download started

S309 Download successful? — YES / NO

S310 Send "DOWNLOAD FAILED"

End

S311 Send "DOWNLOAD COMPLETED"

S312 Downloaded a number of files equal to the number of URIs ? — NO / YES

S313 Rearrange 'urilist' of downloaded 'item'

S314 Content item registration (local)

S315 Content information registration (global)

End

**Sender peer:**

S401 Send requested content item

**Center server:**

S211 Produce content list based on query

S212 Register "DOWNLOAD STARTED" in operation status DB and recalculate load value of the peer

S213 Register "DOWNLOAD FAILED" in operation status DB and recalculate load value of the peer

S214 Register "DOWNLOAD COMPLETED" in operation status DB and recalculate load value of the peer

S215 Content information registration (global)

Fig. 9

Fig. 10

```
        Center server CS                              Peer SP, DP

                                                    ┌─────────────────┐
                                                    │  S421 Send 'item'│
                                                    └─────────────────┘

        ╱─────────────╲
   NO  ╱ S221 Check 'cuid' ╲
  ◄───┤  of 'item' to        │
      │ determine if it is an │
       ╲ already-stored      ╱
        ╲ content item      ╱
         ╲───────────────╱
               │ YES
               ▼
      ┌───────────────────┐
      │ S222 Add only 'urilist'│
      │ of 'item' received from│
      │ peer to 'item' having  │
      │ corresponding 'cuid' in│
      │    global DB           │
      └───────────────────┘

      ┌───────────────────┐
      │ S223 Add 'item' as    │
      │ received from peer to │
      │    global DB          │
      └───────────────────┘

      ┌───────────────────┐
      │ S224 Determine if     │
      │  'item' has been      │
      │  updated or added     │
      │ successfully, and sends│
      │   a return code       │
      │ according to result of │
      │    determination      │
      └───────────────────┘
               │                         ╱───────────────╲  Error
               ▼                        ╱  S422 Check return╲───
      ┌───────────────────┐             ╲      code        ╱
      │       End          │             ╲───────────────╱
      └───────────────────┘                     │ OK
                                                ▼
                                       ┌───────────────┐
                                       │      End       │
                                       └───────────────┘
```

Fig. 11

| Content item A | Peer A load="100" |
| | Peer B load="48" |
| | Peer C load="68" |
| Content item B | Peer A load="100" |
| | Peer B load="48" |
| | Peer C load="68" |
| Content item C | Peer A load="100" |
| | Peer B load="48" |
| | Peer C load="68" |

Fig. 12

Load calculation parameters

| Parameter name | Type | Value |
|---|---|---|
| Basic load value | Upload | 40 |
| | Download | 20 |
| | Reproduction | 30 |
| Connection type coefficient | FTTH | 1 |
| | ADSL | 1 |
| | CABLE | 2 |
| Specifications coefficient | All the peers have the same specifications | 1 |
| Transfer results coefficient | Peer A | 1 |
| | Peer B | 1 |
| | Peer C | 2 |
| | Peer D | 2 |

Fig. 13

| Peer B | Peer D | Center server CS |
|---|---|---|

**S601** Request content list →

← **S501** Send content list to peer after setting current load value in 'load' of 'urilist' of 'item'

**S602** Select peer with lowest load based on 'load' of 'urilist'

**S603** Send "DOWNLOAD STARTED" →

**S502** Increase basic load value of peer B by 40 Increase basic load value of peer D by 20

← **S604** Download request

**Case where download is successful**

Transfer started →

Transfer completed **S605** Send "DOWNLOAD COMPLETED" →

**S503** Decrease basic load value of peer B by 40 Decrease basic load value of peer D by 20

**Case where download fails**

**S606** Peer determines that download has failed and sends "DOWNLOAD FAILED" →

**S504** Set basic load value of peer B to -1 (off-line) Decrease basic load value of peer D by 20

Fig. 14